# EUROPÄISCHE PATENTSCHRIFT

(11) **EP 2 921 328 B1**
(45) Veröffentlichungstag und Bekanntmachung des Hinweises auf die Patenterteilung: **20.06.2018**
(21) Anmeldenummer: 15158662.5
(22) Anmeldetag: 11.03.2015
(51) Int. Cl.: B60H 1/00, B60H 1/24

(54) **LUFTFÜHRUNG FÜR EIN KLIMATISIERUNGSSYSTEM EINES LANDWIRTSCHAFTLICHEN NUTZFAHRZEUGS**
AIR CONDUCTION FOR AN AIR CONDITIONING SYSTEM OF AN AGRICULTURAL COMMERCIAL VEHICLE
AMENÉE D'AIR POUR UN SYSTÈME DE CLIMATISATION D'UN VÉHICULE UTILITAIRE AGRICOLE

(30) Priorität: 18.03.2014 DE 102014204972
(43) Veröffentlichungstag der Anmeldung: 23.09.2015
(73) Patentinhaber: Deere & Company, Moline, IL 61265 (US)
(72) Erfinder: Dietrich, Gunnar, 76530 Baden-Baden (DE)
(74) Vertreter: Dehnhardt, Florian Christopher

(56) Entgegenhaltungen:
- WO-A1-91/12150
- DE-A1- 3 309 560
- JP-A- S5 938 111

## Beschreibung

Die Erfindung betrifft eine Luftführung für ein Klimatisierungssystem eines landwirtschaftlichen Nutzfahrzeugs.

Derartige Luftführungen in landwirtschaftlichen Nutzfahrzeugen weisen üblicherweise eine Vielzahl von mit einem Klimatisierungs- und/oder Belüftungssystem in Verbindung stehenden Luftführungselementen in Gestalt zugehöriger Luftkanäle und -auslässe auf, die innerhalb einer Kabineninnenverkleidung einer Fahrerkabine des landwirtschaftlichen Nutzfahrzeugs verlegt bzw. angebracht sind. Die Verlegung bzw. Anbringung der Luftführungselemente führt nicht nur zu unerwünschten Einschränkungen hinsichtlich der Gestaltungsfreiheit des Kabineninnenraums, sondern ist gerade bei weitgehend vollverglasten Panoramakabinen ohne Behinderung der Sicht nicht ohne Weiteres möglich. Das Dokument JP S 5938111A zeigt eine Luftführung gemäß Oberbegriff des Anspruchs 1. Es ist daher Aufgabe der vorliegenden Erfindung, eine Luftführung der eingangs genannten Art anzugeben, die sowohl hinsichtlich der Gestaltung des Kabineninnenraums weitgehende Freiheiten zulässt als auch eine Verwendung in weitgehend vollverglasten Panoramakabinen ermöglicht.

Diese Aufgabe wird durch eine Luftführung mit den Merkmalen des Patentanspruchs 1 gelöst.

Die erfindungsgemäße Luftführung für ein Klimatisierungssystem eines landwirtschaftlichen Nutzfahrzeugs gemäß Anspruch 1 umfasst einen als Hohlprofil ausgebildeten und an einer Kabinenverkleidung angebrachten Handlauf, wobei der Handlauf einen mit dem Klimatisierungssystem des landwirtschaftlichen Nutzfahrzeugs verbindbaren Lufteinlass sowie zumindest einen entlang des Handlaufs vorgesehenen Luftauslass aufweist. Durch die bauliche Integration der zur Klimatisierung bzw. Belüftung des Kabineninnenraums erforderlichen Luftführung in einen in den meisten Fahrerkabinen ohnehin vorhandenen bzw. benötigten Handlauf, bei der der Handlauf selbst den zum Luftauslass führenden Luftkanal bildet, lässt sich die Notwendigkeit der Anbringung bzw. Verlegung separater Luftführungselemente einschließlich der sich daraus ergebenden Beeinträchtigungen weitgehend vermeiden.

Vorteilhafte Ausführungen der erfindungsgemäßen Luftführung gehen aus den Unteransprüchen hervor. Erfindungsgemäß handelt es sich bei der Kabinenverkleidung um eine Kabinentür, wobei der Handlauf insbesondere als Griff zum Öffnen und Schließen der Kabinentür ausgebildet ist. Der Griff kann die Gestalt eines gebogenen Stahlrohrprofils mit mehreren miteinander verschweißten Griffsegmenten aufweisen, die eine verzweigte Luftführung mit jeweils zugehörigen Luftauslässen bilden. Zur Verbesserung der Ergonomie und Anfassqualität besteht die Möglichkeit, dass der Griff zumindest abschnittweise mit einer aus elastischem Kunststoffmaterial bestehenden Verkleidung oder Beschichtung ummantelt ist. Erfindungsgemäß ist es, dass entlang des Handlaufs eine Vielzahl von Luftauslässen vorgesehen ist, wobei eine erste Gruppe von Luftauslässen auf eine von der Kabinentür umfasste Glasinnenoberfläche gerichtet ist. Ferner ist es möglich, dass eine zweite Gruppe von Luftauslässen in den Kabineninnenraum gerichtet ist, sodass sich durch entsprechende Temperierung des von dem Klimatisierungssystem erzeugten Luftstroms einerseits ein Beschlagen oder Vereisen der Glasinnenoberfläche unterbinden bzw. beseitigen lässt und andererseits eine einem Fahrerwunsch entsprechende Kühlung bzw. Beheizung des Kabineninnenraums möglich ist. Die Kabinentür ist erfindungsgemäß Bestandteil einer rahmenlosen Vollglastür, wie sie im Falle weitgehend vollverglaster Panoramakabinen vorgesehen ist, wobei die Kabinentür typischerweise aus Sicherheitsglas oder einem transparenten Kunststoffmaterial besteht.

Des Weiteren ist es denkbar, dass der Lufteinlass des Handlaufs mit einem Luftauslass eines in einer Kabinensäule verlaufenden Luftversorgungskanals verbindbar ist, wobei der Luftversorgungskanal der Zuführung eines klimatisierten Luftstroms von Seiten des Klimatisierungssystems dient. Bei der Kabinensäule handelt es sich beispielsweise um eine in Vorwärtsfahrtrichtung des landwirtschaftlichen Nutzfahrzeugs liegende vordere Kabinensäule (A-Säule), wobei diese über einen im Bodenbereich der Fahrerkabine verlaufenden Luftkanal mit dem Klimatisierungssystem des landwirtschaftlichen Nutzfahrzeugs kommuniziert.

Im einfachsten Fall ist die Luftversorgungsverbindung mittels eines zwischen dem Luftauslass des Luftversorgungskanals und dem Lufteinlass des Handlaufs angebrachten Luftschlauchs hergestellt. Der aus einer flexiblen Gummimischung bestehende sowie gegebenenfalls als Faltenbalg ausgebildete Luftschlauch lässt sich mittels zugehöriger Klemmschellen luftdicht an dem Luftauslass des Luftversorgungskanals sowie dem Lufteinlass des Handlaufs anbringen. Alternativ besteht die Möglichkeit, dass die Luftversorgungsverbindung reversibel beim Schließen der Kabinentür mittels einer zwischen dem Luftauslass des Luftversorgungskanals und dem Lufteinlass des Handlaufs vorgesehenen Kupplungseinrichtung herstellbar ist. Die Verwendung einer derartigen Kupplungseinrichtung bietet sich vor allem in einem der Scharnierseite der Kabinentür abgewandten Bereich an, da hier angesichts der zu überbrückenden erheblichen Verschwenkwege eine Verlegung fester Luftversorgungsverbindungen, wie die eines Luftschlauchs oder dergleichen, nicht praktikabel ist.

Um einem unerwünschten Druckabfall im Klimatisierungssystem vorzubeugen, ist ein unkontrollierter Luftaustritt am Luftauslass des Luftversorgungskanals beim Öffnen der Kabinentür mittels eines der Kupplungseinrichtung zugeordneten Ventil- und/oder Drosselelements unterbindbar. Ein derartiges Ventilelement kann in Gestalt einer dem Luftauslass des Luftversorgungskanals zugeordneten Ventilklappe ausgebildet sein, wobei diese beim Schließen der Kabinentür mittels eines an dem Lufteinlass des Handlaufs angebrachten Mündungsstücks unter Herstellung einer luftdichten Presspassung entgegen einer rückstellenden Federkraft in eine durchlässige Stellung verbracht wird. Umgekehrt wird beim Öffnen der Kabinentür die luftdichte Presspassung unter Freigabe der Ventilklappe gelöst, wobei diese aufgrund der auf sie wirkenden rückstellenden Federkraft von selbst in ihre geschlossene Stellung zurückkehrt und den Luftauslass des Luftversorgungskanals zur Umgebung hin abdichtet. Im Sinne einer baulichen Vereinfachung kann die Kupplungseinrichtung anstelle einer federbelasteten Ventilklappe auch ein Drosselelement in Gestalt eines verjüngten Durchflussbereichs aufweisen, das einen unkontrollierten Luftaustritt am Luftauslass des Luftversorgungskanals beim Öffnen der Kabinentür sowie einen damit einhergehenden Druckabfall im Klimatisierungssystem des landwirtschaftlichen Nutzfahrzeugs auf unkritische Werte begrenzt.

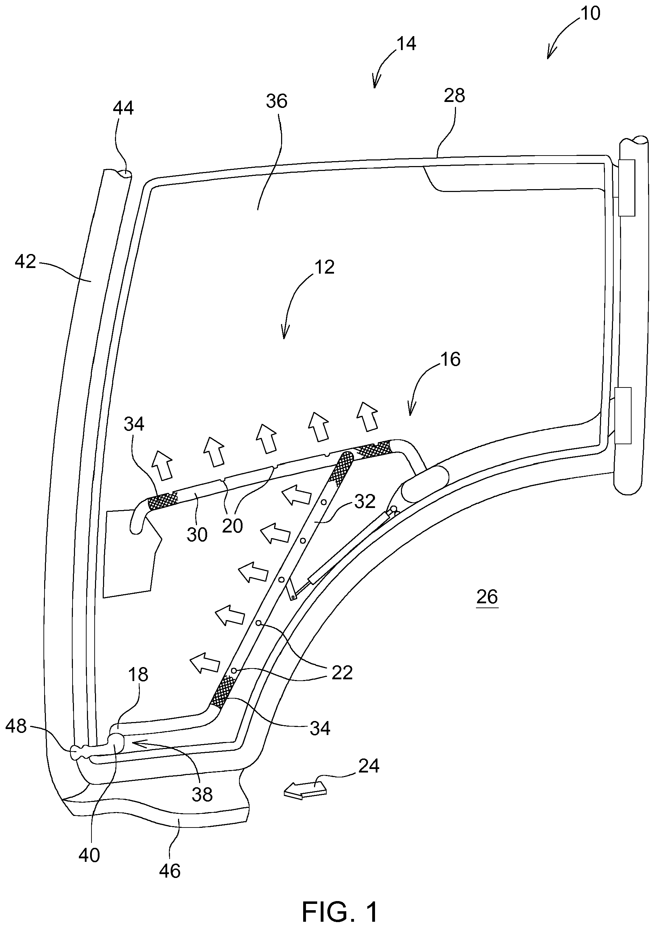

Die erfindungsgemäße Luftführung wird im Folgenden anhand der beigefügten Zeichnung näher erläutert.

Dabei zeigt die einzige Figur ein schematisch dargestelltes Ausführungsbeispiel der erfindungsgemäßen Luftführung für ein Klimatisierungssystem eines nicht dargestellten landwirtschaftlichen Nutzfahrzeugs, beispielsweise eines landwirtschaftlichen Traktors.

Die innerhalb einer Fahrerkabine 10 des landwirtschaftlichen Nutzfahrzeugs verlaufende Luftführung 12 umfasst einen als Hohlprofil ausgebildeten und an einer Kabinenverkleidung 14 angebrachten Handlauf 16, wobei der Handlauf 16 einen mit dem Klimatisierungssystem des landwirtschaftlichen Nutzfahrzeugs verbindbaren Lufteinlass 18 sowie eine Vielzahl von entlang des Handlaufs 16 vorgesehene Luftauslässe 20, 22 in Gestalt zugehöriger Austrittsblenden bzw. -öffnungen aufweist.

Das aus Gründen der Übersichtlichkeit nicht dargestellte Klimatisierungssystem des landwirtschaftlichen Nutzfahrzeugs ist von herkömmlicher Bauart und weist neben einem in der Fahrerkabine 10 angeordneten Bedienfeld, über das sich unter anderem Intensität, Luftverteilung und Temperatur eines von dem Klimatisierungssystem erzeugten Luftstroms 24 vorgeben lassen, eine Vielzahl weiterer Luftauslässe in Gestalt zugehöriger Austrittsblenden auf. Erfindungsgemäß handelt es sich bei der Kabinenverkleidung 14 um eine aus Sicht des Kabineninnenraums 26 dargestellte Kabinentür 28, die als rahmenlose Vollglastür einer weitgehend vollverglasten Panoramakabine ausgeführt ist und aus Sicherheitsglas oder einem transparenten Kunststoffmaterial besteht.

Der als Griff zum Öffnen und Schließen der Kabinentür 28 ausgebildete Handlauf 16 weist die Gestalt eines gebogenen Stahlrohrprofils mit mehreren miteinander verschweißten Griffsegmenten 30, 32 auf, die eine verzweigte Luftführung 12 mit jeweils zugehörigen Luftauslässen 20, 22 bilden. Zur Verbesserung der Ergonomie und Anfassqualität ist der Handlauf 16 zumindest abschnittweise mit einer aus elastischem Kunststoffmaterial bestehenden Verkleidung oder Beschichtung 34 ummantelt.

Eine erste Gruppe von Luftauslässen 20 ist auf eine von der Kabinentür 28 umfasste Glasinnenoberfläche 36 und eine zweite Gruppe von Luftauslässen 22 in den Kabineninnenraum 26 gerichtet, sodass sich durch entsprechende Temperierung des von dem Klimatisierungssystem erzeugten Luftstroms 24 einerseits ein Beschlagen oder Vereisen der Glasinnenoberfläche 36 unterbinden bzw. beseitigen lässt und andererseits eine einem Fahrerwunsch entsprechende Kühlung bzw. Beheizung des Kabineninnenraums 26 möglich ist.

Eine Kupplungseinrichtung 38 in einem der Scharnierseite der Kabinentür 28 abgewandten Bereich dient der Herstellung einer reversiblen Luftversorgungsverbindung zwischen dem Lufteinlass 18 des Handlaufs 16 und einem Luftauslass 40 eines in einer Kabinensäule 42 verlaufenden Luftversorgungskanals 44, wobei der Luftversorgungskanal 44 der Zuführung des von dem Klimatisierungssystem erzeugten Luftstroms 24 dient. Bei der Kabinensäule 42 handelt es sich im vorliegenden Fall um eine in Vorwärtsfahrtrichtung des landwirtschaftlichen Nutzfahrzeugs liegende vordere Kabinensäule (A-Säule), wobei diese über einen im Bodenbereich der Fahrerkabine 10 verlaufenden Luftkanal 46 mit dem Klimatisierungssystem des landwirtschaftlichen Nutzfahrzeugs kommuniziert. Genauer gesagt wird beim Schließen der Kabinentür 28 mittels der Kupplungseinrichtung 38 eine luftdichte Presspassung zwischen einem an dem Lufteinlass 18 des Handlaufs 16 angebrachten Mündungsstück und dem Luftauslass 40 des Luftversorgungskanals 44 hergestellt. Ein Drosselelement 48 in Gestalt eines verjüngten Durchflussbereichs unterbindet einen unkontrollierten Luftaustritt am Luftauslass 40 des Luftversorgungskanals 44 beim Öffnen der Kabinentür 28 und begrenzt einen damit einhergehenden Druckabfall im Klimatisierungssystem auf unkritische Werte.

Gemäß einer nicht dargestellten alternativen Ausgestaltung der Luftführung 12 ist die Luftversorgungsverbindung mittels eines Luftschlauchs hergestellt, wobei dieser zwischen einem der Scharnierseite der Kabinentür 28 zugeordneten Lufteinlass des Handlaufs 16 und einem Luftversorgungskanal, der innerhalb einer in Vorwärtsfahrtrichtung des landwirtschaftlichen Nutzfahrzeugs liegenden hinteren Kabinensäule (C-Säule) verläuft, angebracht ist.

## Patentansprüche

1. Luftführung für ein Klimatisierungssystem eines landwirtschaftlichen Nutzfahrzeugs, umfassend einen als Hohlprofil ausgebildeten und an einer Kabinenverkleidung (14) angebrachten Handlauf (16), wobei der Handlauf (16) einen mit dem Klimatisierungssystem des landwirtschaftlichen Nutzfahrzeugs verbindbaren Lufteinlass (18) sowie zumindest einen entlang des Handlaufs (16) vorgesehenen Luftauslass (20, 22) aufweist, **dadurch gekennzeichnet, dass** es sich bei der Kabinenverkleidung (14) um eine als rahmenlose Vollglastür ausgeführte Kabinentür (28) handelt und entlang des Handlaufs (16) eine Vielzahl von Luftauslässen (20, 22) vorgesehen ist, wobei eine erste Gruppe von Luftauslässen (20) auf eine von der Kabinentür (28) umfasste Glasinnenoberfläche (36) gerichtet ist.

2. Luftführung nach Anspruch 1, **dadurch gekennzeichnet, dass** der Handlauf (16) als Griff zum Öffnen und Schließen der Kabinentür (28) ausgebildet ist.

3. Luftführung nach Anspruch 2, **dadurch gekennzeichnet, dass** eine zweite Gruppe von Luftauslässen (22) in einen Kabineninnenraum (26) gerichtet ist.

4. Luftführung nach einem der Ansprüche 1 bis 3, **dadurch gekennzeichnet, dass** der Lufteinlass (18) des Handlaufs (16) mit einem Luftauslass (40) eines in einer Kabinensäule (42) verlaufenden Luftversorgungskanals (44) verbindbar ist, wobei der Luftversorgungskanal (44) der Zuführung eines klimatisierten Luftstroms (24) von Seiten des Klimatisierungssystems dient.

5. Luftführung nach Anspruch 4, **dadurch gekennzeichnet, dass** die Luftversorgungsverbindung mittels eines zwischen dem Luftauslass des Luftversorgungskanals und dem Lufteinlass des Handlaufs (16) angebrachten Luftschlauchs hergestellt ist.

6. Luftführung nach Anspruch 4, **dadurch gekennzeichnet, dass** die Luftversorgungsverbindung reversibel beim Schließen der Kabinentür (28) mittels einer zwischen dem Luftauslass (40) des Luftversorgungskanals (44) und dem Lufteinlass (18) des Handlaufs (16) vorgesehenen Kupplungseinrichtung (38) herstellbar ist.

7. Luftführung nach Anspruch 6, **dadurch gekennzeichnet, dass** ein unkontrollierter Luftaustritt am Luftauslass (40) des Luftversorgungskanals (44) beim Öffnen der Kabinentür (28) mittels eines der Kupplungseinrichtung (38) zugeordneten Ventil- und/oder Drosselelements (48) unterbindbar ist.

8. Klimatisierungssystem eines landwirtschaftlichen Nutzfahrzeugs mit einer innerhalb einer Fahrerkabine (10) des landwirtschaftlichen Nutzfahrzeugs verlaufenden Luftführung (12) nach einem der Ansprüche 1 bis 7.

## Claims

1. Air duct for an air-conditioning system of an agricultural commercial vehicle, comprising a hand rail (16) which is designed as a hollow profile and is attached to a cab fairing (14), wherein the hand rail (16) has an air inlet (18) which is connectable to the air-conditioning system of the agricultural commercial vehicle, and at least one air outlet (20, 22) which is provided along the hand rail (16), **characterized in that** the cab fairing (14) is a cab door (28) designed as a frameless full glass door, and a multiplicity of air outlets (20, 22) are provided along the hand rail (16), wherein a first group of air outlets (20) is directed onto a glass inner surface (36) surrounded by the cab door (28).

2. Air duct according to Claim 1, **characterized in that** the hand rail (16) is designed as a handle for opening and closing the cab door (28).

3. Air duct according to Claim 2, **characterized in that** a second group of air outlets (22) is directed into a cab interior (26).

4. Air duct according to one of Claims 1 to 3, **characterized in that** the air inlet (18) of the hand rail (16) is connectable to an air outlet (40) of an air supply duct (44) running in a cab pillar (42), wherein the air supply duct (44) serves for supplying an air-conditioned air flow (24) by the air-conditioning system.

5. Air duct according to Claim 4, **characterized in that** the air supply connection is produced by means of an air hose attached between the air outlet of the air supply duct and the air inlet of the hand rail (16) .

6. Air duct according to Claim 4, **characterized in that** the air supply connection can be reversibly produced by means of a coupling device (38), which is provided between the air outlet (40) of the air supply duct (44) and the air inlet (18) of the hand rail (16), when the cab door (28) is closed.

7. Air duct according to Claim 6, **characterized in that** an uncontrolled exit of air at the air outlet (40) of the air supply duct (44) when the cab door (28) is opened can be prevented by means of a valve and/or throttle element (48) assigned to the coupling device (38).

8. Air-conditioning system of an agricultural commercial vehicle with an air duct (12) running within a driver's cab (10) of the agricultural commercial vehicle, according to one of Claims 1 to 7.

## Revendications

1. Guidage d'air pour un système de climatisation d'un véhicule utilitaire agricole, comprenant une main courante (16) réalisée sous forme de profilé creux et montée sur un habillage de la cabine (14), la main courante (16) présentant une entrée d'air (18) pouvant être connectée au système de climatisation du véhicule utilitaire agricole ainsi qu'au moins une sortie d'air (20, 22) prévue le long de la main courante (16), **caractérisé en ce que** l'habillage de la cabine (14) est une porte de cabine (28) réalisée sous forme de porte entièrement en verre sans encadrement et une pluralité de sorties d'air (20, 22) sont prévues le long de la main courante (16), un premier groupe de sorties d'air (20) étant orienté vers une surface intérieure en verre (36) de la porte de cabine (28).

2. Guidage d'air selon la revendication 1, **caractérisé en ce que** la main courante (16) est réalisée sous forme de poignée pour ouvrir et fermer la porte de cabine (28).

3. Guidage d'air selon la revendication 2, **caractérisé en ce qu'**un deuxième groupe de sorties d'air (22) est orienté dans un habitacle de la cabine (26).

4. Guidage d'air selon l'une quelconque des revendications 1 à 3, **caractérisé en ce que** l'entrée d'air (18) de la main courante (16) peut être connectée à une sortie d'air (40) d'un conduit d'alimentation en air (44) s'étendant dans une colonne de la cabine (42), le canal d'alimentation en air (44) servant à acheminer un flux d'air climatisé (24) depuis le système de climatisation.

5. Guidage d'air selon la revendication 4, **caractérisé en ce que** la connexion d'alimentation en air est établie au moyen d'un tuyau d'air monté entre la sortie d'air du conduit d'alimentation et l'entrée d'air de la main courante (16).

6. Guidage d'air selon la revendication 4, **caractérisé en ce que** la connexion d'alimentation en air peut être établie de manière réversible lors de la fermeture de la porte de cabine (28) au moyen d'un dispositif d'accouplement (38) prévu entre la sortie d'air (40) du conduit d'alimentation en air (44) et l'entrée d'air (18) de la main courante (16).

7. Guidage d'air selon la revendication 6, **caractérisé en ce qu'**une sortie d'air incontrôlée au niveau de la sortie d'air (40) du conduit d'alimentation en air (44) lors de l'ouverture de la porte de cabine (28) peut être évitée au moyen d'un élément de soupape et/ou d'étranglement (48) associé au dispositif d'accouplement (38).

8. Système de climatisation d'un véhicule utilitaire agricole comprenant un guidage d'air (12) selon l'une quelconque des revendications 1 à 7 s'étendant à l'intérieur d'une cabine de conducteur (10) du véhicule utilitaire agricole.
